# FASCICULE DE BREVET EUROPEEN

(11) **EP 1 494 391 B1**
(45) Date de publication et mention de la délivrance du brevet: **03.03.2010**
(21) Numéro de dépôt: 04103114.7
(22) Date de dépôt: 01.07.2004
(51) Int. Cl.: H04L 12/24, H04L 12/28

(54) **Procédé de configuration automatique d'un routeur d'accès, compatible avec le protocole DHCP, pour effectuer un traitement automatique spécifique des flux IP d'un terminal client**
Automatische Konfiguration eines, mit DHCP kompatibelen Zugangsrouters, zur spezifischen Abfertigung der IP-Datenströme eines Terminals
Automatic configuration of a DHCP-compatible access router, for specific handling of the IP-dataflows from a client terminal

(30) Priorité: 04.07.2003 FR 0350296
(43) Date de publication de la demande: 05.01.2005
(73) Titulaire: FRANCE TELECOM, 75015 Paris (FR)
(72) Inventeur: Vinel, Romain, 22560 Trebeurden (FR); Battello, Fabien, 22700 Perros Guirec (FR)
(74) Mandataire: Windal-Vercasson, Gaelle I.M.

(56) Documents cités:
- US-A1- 2002 046 263
- US-A1- 2003 101 217
- US-A1- 2003 101 243
- US-B1- 6 223 222

## Description

### DOMAINE TECHNIQUE

La présente invention concerne un procédé et un dispositif de configuration automatique d'un routeur d'accès, compatible avec le protocole DHCP, pour effectuer un traitement automatique spécifique des flux IP d'un terminal client dans un réseau informatique, en fonction d'un ensemble donné de valeurs de paramètres de traitement de flux correspondant à la ligne cliente du terminal client, le routeur d'accès assurant le routage du trafic DHCP entre le terminal client et tout serveur DHCP du réseau apte à proposer un bail à ce terminal client. La partie du réseau relative à la configuration selon le protocole DHCP étant à architecture du type client/serveur. Le trafic DHCP entre un terminal et un serveur DHCP désignant le trafic relatif à la configuration du terminal, selon le protocole DHCP, par le serveur. La ligne de connexion entre un terminal client et un routeur d'accès, sur laquelle transitent les flux entre le terminal et le routeur, est appelée ligne cliente et correspond donc au terminal client.

L'invention concerne donc les réseaux informatiques et le domaine technique de l'invention est celui de la configuration des équipements de tels réseaux par l'intermédiaire de protocoles de configuration et plus particulièrement la commande de ressources sur des équipements de réseau (c'est-à-dire la configuration de ces équipements de réseau pour programmer les paramètres spécifiques à un raccordement client). Les réseaux considérés sont ceux sur lesquels le trafic, notamment les communications entre processus, est effectué suivant des protocoles (ou ensembles de règles et de procédures à respecter pour émettre et recevoir des données sur un réseau) de la suite de protocoles de communication TCP/IP [1] (« Transmission Control Protocol/Internet Protocol ») utilisés sur Internet. Le terme réseau désigne aussi bien un réseau privé que public ou que plusieurs réseaux privés ou publics d'opérateurs de télécommunication reliés entre eux par des routeurs. Les connexions ou les accès Internet sur ces réseaux pouvant être à haut débit, par exemple par ADSL (« Asymmetric Digital Subscriber Line », ou ligne d'abonné numérique à débit asymétrique). Les messages échangés circulant sur les réseaux considérés sont donc sous la forme de paquets de données (ou datagrammes IP) selon le protocole IP (ou protocole Internet [2]), les termes trafic IP ou encore flux IP seront aussi utilisés (un flux IP est défini par les éléments contenus dans l'en-tête des paquets IP : adresse IP source ou destination, protocole, ports sources ou destination, type de service etc.).

En particulier, le protocole DHCP [3](« Dynamic Host Configuration Protocol ») permet à un équipement client qui se connecte sur le réseau (ou qui renouvelle son bail) d'obtenir d'un serveur DHCP sa configuration de manière dynamique et notamment son adresse IP, pour la durée du bail accordé par le serveur. L'obtention d'un bail par un terminal client, hôte du réseau, comporte quatre phases :
- le client envoie une requête de configuration sur le réseau sous la forme d'un message DHCPDISCOVER, en diffusion générale (« broadcast »), pour trouver un serveur DHCP ;
- un ou plusieurs serveurs DHCP du réseau ayant reçu le message DHCPDISCOVER répondent par un message DHCPOFFER qui indique une proposition de bail ;
- le client répond à cette proposition par un message DHCPREQUEST (en diffusion générale) qui indique qu'il accepte l'offre de bail d'un serveur DHCP donné ;
- le serveur DHCP concerné répond par un message DHCPACK pour confirmer le bail et notamment pour attribuer une adresse IP au client (les autres serveurs retirent alors leurs propositions).

Les serveurs DHCP peuvent être sur un même réseau ou bien sur des réseaux différents (interconnectés), dans ce dernier cas il est nécessaire d'installer un agent relais DHCP sur un équipement du réseau (c'est souvent un routeur) de manière à ce qu'il puisse intercepter les messages en diffusion générale (qui normalement ne peuvent pas traverser un routeur) et les diriger vers les serveurs dont il connaît les adresses IP et qui ne sont pas sur le réseau local du client. Ainsi un agent relais DHCP relaie les messages DHCP entre un client et un serveur DHCP qui ne sont pas sur le même réseau local, permettant de mettre en oeuvre un service DHCP centralisé pour un ensemble de réseaux locaux.

Les applications de l'invention concernent les réseaux informatiques et les réseaux de télécommunication (à lignes d'abonné numérique à débit ordinaire, par exemple à raccordement client par câble, ou à débit élevé, par exemple à raccordement ADSL) ainsi que les accès à Internet d'équipements de ces réseaux.

### ETAT DE LA TECHNIQUE ANTERIEURE

Les accès à Internet par ADSL utilisent aujourd'hui majoritairement le protocole point à point PPP [4] (« Point to Point Protocol »). Ce protocole permet au client de se connecter à un réseau distant sur lequel il est identifié par un couple mot de connexion/mot de passe (« login/password »). Dans l'état actuel des réalisations industrielles, le protocole PPP est souvent couplé avec le protocole RADIUS [5,6] (« Remote Authentification Dial-In User Service ») pour la commande de ressources sur les routeurs d'accès : lorsqu'un routeur d'accès reçoit une demande de connexion PPP émise par un terminal client, il relaie la demande vers un serveur d'authentification au moyen du protocole RADIUS ; lorsque le serveur d'authentification répond au routeur d'accès, la réponse peut contenir un certain nombre d'éléments déterminant la façon dont le trafic du client doit être traité par le routeur d'accès. Le traitement du trafic consistant, par exemple, à filtrer une adresse IP ou un port ou un protocole (protocole désigne ici un champ de l'entête des paquets IP qui indique le protocole supporté au-dessus du protocole IP tel que, par exemple, le protocole TCP [7] ou le protocole UDP [8]) ou encore à limiter le débit de transmission sur certains flux.

Bien qu'il soit aujourd'hui largement utilisé pour les accès Internet, le protocole PPP présente un certain nombre de limitations :
- en ce qui concerne les terminaux de type PC (« Personal Computer »), ou ordinateurs personnels, il est assez facile d'y installer le protocole PPP car les systèmes d'exploitation courants peuvent être équipés de ce type de pile protocolaire, par contre, la plupart des terminaux non PC utilisables sur un accès ADSL (tels que, par exemple, les téléphones IP, les boîtiers décodeurs (« Set-Top Box »), les consoles de jeux, etc...) sont le plus souvent conçus pour être utilisés sur des réseaux locaux et ne possèdent pas de pile PPP ;
- l'utilisation de PPP provoque une encapsulation des paquets IP et par conséquent, lorsque PPP est utilisé entre un client et un routeur d'accès, il n'est pas possible d'avoir une différentiation des qualités de service (au niveau IP) dans les équipements intermédiaires entre le client et le routeur ;
- l'utilisation de PPP entre un client et un routeur d'accès, est incompatible, à cause de l'encapsulation des paquets IP, avec une réplication des paquets dans les équipements intermédiaires, c'est-à-dire avec la multidiffusion (ou « multicast »).

En ce qui concerne le protocole RADIUS, son utilisation dans les raccordements ADSL d'équipements, pour la commande de ressources sur les routeurs d'accès, présente l'inconvénient que le codage des paramètres RADIUS pour le traitement du trafic IP d'un client est le plus souvent propriétaire.

Il existe d'autres protocoles spécifiques à la commande de ressources, par exemple COPS [9](« Common Open Policy Service protocol ») ou MIDCOM, ou bien des protocoles plus généralistes comme, par exemple, SNMP [10](« Simple Network Management Protocol ») ou Telnet [11], qui peuvent être utilisés pour paramétrer les équipements réseau, mais leur implémentation est principalement propriétaire aujourd'hui.

Enfin si l'on utilise le protocole DHCP, au lieu du protocole PPP, avec un protocole de commande de ressources, il en résulte une organisation complexe du plan de commande du réseau : un serveur DHCP, lorsqu'il attribue une adresse IP à un client doit alors invoquer une entité ayant en charge le contrôle des ressources du réseau pour qu'elle programme (suivant un autre protocole) sur l'équipement de réseau les paramètres spécifiques au terminal client nouvellement raccordé. De plus, cette façon de gérer la configuration d'un terminal client et la gestion de son trafic présente des inconvénients de contraintes d'exploitation : il faut un mécanisme d'exploitation et de maintenance qui détecte régulièrement les modifications de profil client (c'est-à-dire les paramètres de gestion des flux) qui ont lieu pour remettre à jour les paramètres de trafic sur l'équipement de réseau programmé (un routeur d'accès le plus souvent). Ce mécanisme est lourd à mettre en place, notamment s'il doit prendre en compte rapidement les modifications de profils clients.

On connaît du document de brevet US 6,223,222 de Fijolek et al., un mécanisme de type CAC ("Connection Admission Control") dans un système de transmission de données par câble permettant de déterminer si une bande passante suffisante est disponible pour établir une connexion, présentant une certaine qualité de service, requise par un modem par câble. Selon ce mécanisme, un serveur de qualité de service insère dans un message de type DHCP Offer un identifiant de qualité de service relatif à la qualité de service requise par le modem par câble.

Un tel mécanisme repose donc sur l'utilisation du protocole DHCP à des fins de réservation de la bande passante nécessaire à l'établissement d'une connexion à qualité de service requise par un terminal client.

Il ne permet cependant pas de configurer automatiquement un routeur d'accès à partir des valeurs de paramètres de traitement de flux mémorisées dans un profil client.

Il est clair que, au regard des inconvénients de l'art antérieur, il existe un besoin de disposer sur un réseau d'un mécanisme de gestion du trafic de terminaux clients et de commande de ressources qui soit simple, qui permette de prendre en compte rapidement des modifications de profils clients et qui évite d'aboutir à une organisation complexe du plan de commande du réseau. En outre, ce mécanisme doit être compatible avec la multidiffusion et doit pouvoir être utilisé avec des accès à Internet par câble ou par ADSL.

### EXPOSÉ DE L'INVENTION

L'invention vise ainsi à pallier les inconvénients de l'art antérieur en permettant la commande de ressources sur des équipements d'un réseau, à transferts de données suivant le protocole Internet, pour effectuer le traitement des flux IP émis ou reçus par un terminal client du réseau, de manière complètement compatible avec le protocole de configuration des éléments du réseau de manière à simplifier le plan de commande du réseau et à rendre possible une prise en compte rapide d'un changement de profil du client ; le protocole de configuration retenu dans l'invention devant permettre la multidiffusion et devant pouvoir être utilisé aussi bien sur un réseau local que sur un réseau avec des accès à Internet (notamment par ADSL).

Pour atteindre ces buts, l'invention associe tout d'abord complètement la phase de configuration du terminal client considéré et la commande de ressources (contrairement à l'art antérieur) et choisit le protocole DHCP pour la configuration dynamique des hôtes du réseau considéré. Le protocole DHCP est utilisé à la fois pour la configuration et pour la commande de ressources, ce qui simplifie le plan de commande et permet une mise à jour rapide (dynamique) des profils des clients.

Le protocole DHCP présente l'avantage de la simplicité et de la disponibilité sur un vaste ensemble de terminaux différents. Le protocole DHCP est utilisé aujourd'hui de façon assez massive dans les réseaux locaux pour la configuration des terminaux clients. Son utilisation se développe dans les réseaux d'opérateurs de télécommunication, à la fois pour le câble et pour l'ADSL. Ce protocole, qui a été initialement conçu pour un usage en réseau local, a progressivement été complété pour intégrer certains besoins des réseaux publics ; en particulier il dispose de l'option 82 [12] permettant à un relais DHCP d'insérer dans chaque requête DHCP une identification de la ligne cliente du terminal client qui fait cette requête, cette information d'identification de ligne qui correspond à l'option 82 est appelée dans ce qui suit information de type 'DHCP-RAIO' (pour « DHCP-Relay Agent Information Option »). La fonction de relais DHCP permet à un équipement de réseau de retransmettre les messages DHCP entre clients et serveurs lorsque ceux-ci sont sur des réseaux locaux différents et les agents relais DHCP permettent de mettre en oeuvre un service DHCP centralisé pour un ensemble de réseaux locaux.

L'invention ajoute une fonctionnalité importante qui manque au protocole DHCP : il s'agit d'une fonctionnalité qui permet de paramétrer sur le routeur d'accès qui route le trafic du terminal client considéré, la façon dont doit être traité le trafic du client auquel une adresse IP est donnée par DHCP.

L'invention utilise la phase de configuration par DHCP du terminal client considéré pour paramétrer, au même moment, la manière dont le réseau devra traiter le trafic émis par le terminal ou à destination du terminal, en configurant automatiquement le routeur d'accès qui route le trafic entre le terminal et le réseau (notamment le trafic entre le terminal et le serveur DHCP de configuration du terminal) en fonction de valeurs de paramètres de traitement de flux IP données pour ce terminal.

Lorsqu'un terminal client est raccordé à la ligne cliente (ligne de connexion entre le terminal et le ou les serveurs DHCP aptes à le configurer, via un routeur d'accès) sur le réseau, il envoie un message DHCPDISCOVER sur le réseau, il reçoit en réponse des propositions de bail de la part de serveurs DHCP du réseau, il accepte une proposition d'un serveur DHCP (en général la première reçue) et émet un message DHCPREQUEST pour accepter le bail du serveur et c'est à ce moment que, selon l'invention, une information d'identification de la ligne cliente sur laquelle se trouve le terminal client est insérée dans la requête DHCPREQUEST et cette requête ainsi complétée est transmise au serveur via le routeur. Cette information d'identification de la ligne cliente est associée aux valeurs des paramètres de traitement des flux de la ligne cliente du terminal client correspondante (profil client) et si ces valeurs sont modifiées, l'information d'identification est associée aux nouvelles valeurs. Il suffit alors, selon l'invention, d'utiliser cette information d'identification contenue dans la requête DHCP complétée, par exemple la requête DHCPREQUEST complétée, diffusée sur le réseau, pour obtenir le jeu correspondant de valeurs de paramètres de traitement de flux et configurer, en fonction de ce jeu, le routeur d'accès de façon à ce qu'il effectue le traitement correspondant sur les flux qu'il route et qui concernent la ligne du terminal. Le routeur d'accès doit bien sûr être configurable suivant un profil, mais c'est le cas de la plupart des routeurs aujourd'hui. L'homme du métier notera que le processus selon l'invention peut facilement être adapté pour traiter le cas où, le terminal étant déjà raccordé au réseau, il renouvelle son bail.

Plus précisément, l'invention est, dans son mode de réalisation général, un procédé de configuration automatique d'un routeur d'accès, selon la revendication 1.

Il est à noter que, de manière équivalente, l'information d'identification de la ligne cliente du terminal client peut tout aussi bien être insérée, à l'étape a) du procédé, sur tout autre type de message DHCP que le DHCPREQUEST relayé vers un serveur (par exemple DHCPDISCOVER).

Un mode particulier de réalisation de l'invention, appelé mode avec traitement spécifique, est un procédé de configuration automatique d'un routeur d'accès selon le mode général dans lequel les valeurs des paramètres de traitement des flux permettent de configurer le routeur d'accès pour qu'il soit apte à effectuer sur des flux routés des opérations consistant à :
- filtrer certaines adresses IP du réseau, pour des flux dans le sens client vers réseau ou réseau vers client ; ou
- filtrer certains ports, pour des flux dans le sens client vers réseau ou réseau vers client ; ou
- filtrer certains protocoles IP, pour des flux dans le sens client vers réseau ou réseau vers client ; ou
- limiter le débit de flux IP à destination ou provenant de certaines adresses ou certains ports IP ; ou
- assurer une qualité de service spécifique pour certains flux IP, pour des flux dans le sens client vers réseau ou réseau vers client.

Ce mode de réalisation permet donc d'appliquer un profil spécifique pour le gestion des flux d'un terminal client, notamment lors de son raccordement au réseau.

Il est avantageux d'utiliser une information de type DHCP-RAIO (utilisable par l'option 82 du message DHCP) comme information d'identification de la ligne cliente sur laquelle se trouve le terminal client, c'est pourquoi, dans le mode avec DHCP-RAIO de réalisation de l'invention, qui est un procédé de configuration automatique d'un routeur d'accès selon le mode général ou selon le mode avec traitement spécifique, l'information permettant d'identifier le terminal client est une information de type DHCP-RAIO.

Ce mode de réalisation est particulièrement avantageux lorsqu'il faut commander des ressources pour un grand nombre de terminaux.

Enfin l'invention est aussi relative à un dispositif pour la mise en oeuvre du nouveau procédé de configuration de routeur. Plus précisément l'invention concerne aussi un dispositif général qui est un dispositif de configuration automatique d'un routeur d'accès, selon la revendication 6.

L'invention concerne aussi un dispositif avec traitement spécifique qui est un dispositif de configuration automatique d'un routeur d'accès selon le dispositif général dans lequel les valeurs des paramètres de traitement des flux permettent de configurer le routeur d'accès pour qu'il soit apte à effectuer sur des flux routés des opérations consistant à :
- filtrer certaines adresses IP du réseau, pour des flux dans le sens client vers réseau ou réseau vers client ; ou
- filtrer certains ports, pour des flux dans le sens client vers réseau ou réseau vers client ; ou
- filtrer certains protocoles IP, pour des flux dans le sens client vers réseau ou réseau vers client ; ou
- limiter le débit de flux IP à destination ou provenant de certaines adresses ou certains ports IP ; ou
- assurer une qualité de service spécifique pour certains flux IP, pour des flux dans le sens client vers réseau ou réseau vers client.

L'invention est aussi relative à un dispositif de configuration automatique d'un routeur d'accès, dit dispositif avec DHCP-RAIO, qui est un dispositif selon le dispositif général ou selon le dispositif avec traitement spécifique dans lequel l'information permettant d'identifier le terminal client est une information de type DHCP-RAIO.

Comme l'homme du métier peut le constater sur les divers modes de réalisation exposés, l'invention diffère de l'art antérieur sur plusieurs points et notamment sur le fait important que le processus de configuration par DHCP d'un terminal client n'est plus séparée du processus de commande de ressources mais qu'au contraire ils sont effectués de manière concomitante et selon un même protocole.

Les applications de l'inventions concernent les réseaux informatiques et les réseaux de télécommunication (à lignes d'abonné numérique à débit ordinaire, par exemple à raccordement client par câble, ou à débit élevé, par exemple à raccordement ADSL) ainsi que les accès à Internet d'équipements de ces réseaux.

### BRÈVE DESCRIPTION DES DESSINS

Les caractéristiques et avantages de l'invention exposée plus haut, ainsi que d'autres qui ressortiront de la description de modes particuliers de réalisation, donnés à titre d'exemples, apparaîtront davantage en se référant aux dessins annexés, sur lesquels :
- la Figure 1 est un schéma d'un dispositif selon l'invention dans lequel les modules M1, M2 et M3 sont implantés sur le routeur d'accès 2.
- la Figure 2 est un schéma d'un dispositif selon l'invention dans lequel les modules M1 et M3 sont implantés sur le routeur d'accès 21 et le module M2 est implanté sur le serveur DHCP 31.
- la Figure 3 est un schéma d'un dispositif selon l'invention dans lequel le module M1 est implanté sur un agent relais DHCP 16 et les modules M2 et M3 sont implantés sur le routeur d'accès 22.
- la Figure 4 est un schéma d'un dispositif selon l'invention dans lequel le module M1 est implanté sur un agent relais DHCP 16, le module M2 est implanté sur le serveur DHCP 31 et le module M3 est implanté sur le routeur d'accès 23.

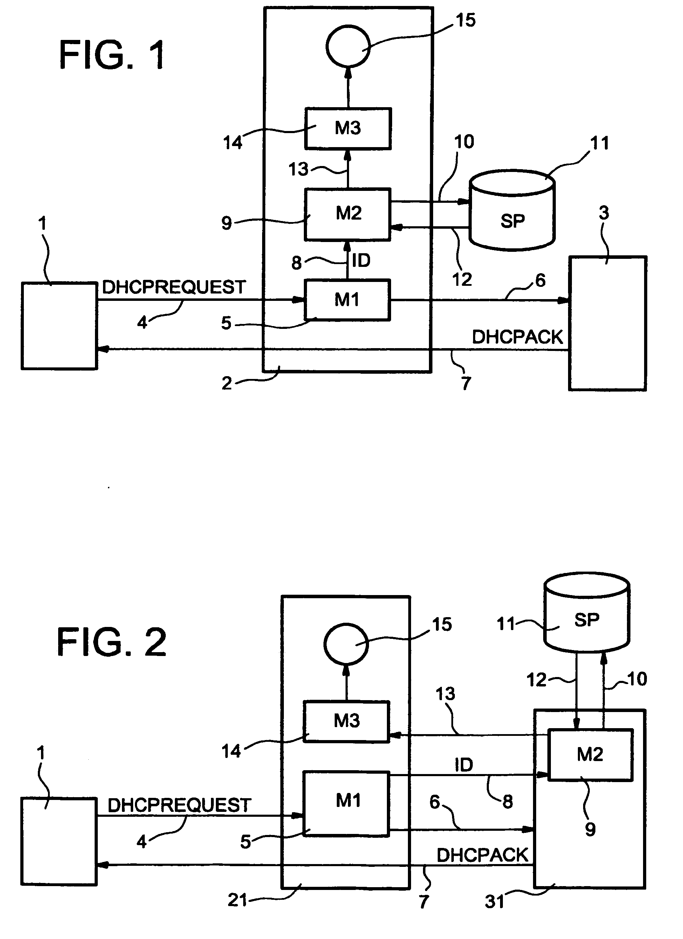

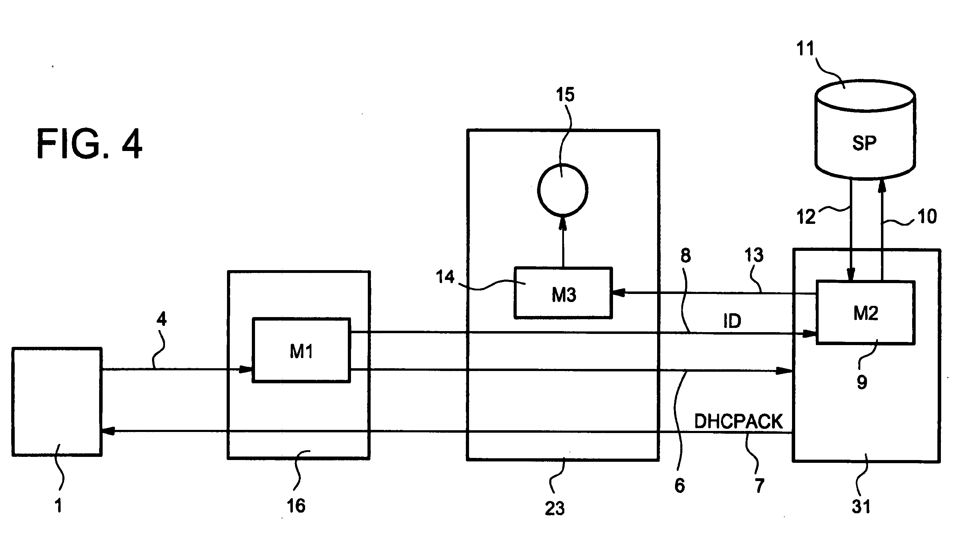

Dans les figures 1 à 4, les objets identiques ou similaires portent le même numéro de référence.

### EXPOSÉ DÉTAILLÉ DE MODES DE RÉALISATION PARTICULIERS

Dans le procédé de configuration automatique d'un routeur d'accès selon l'invention, il peut être avantageux de profiter de la réponse DHCPACK du serveur DHCP de configuration du terminal client, réponse qui transite par le routeur d'accès à configurer en fonction du profil du terminal client, pour transmettre au routeur les paramètres de traitement de flux pour sa configuration. Le routeur n'a alors qu'à extraire les paramètres du message, avant de le router vers le terminal, pour lancer sa configuration. Ainsi, le mode particulier de réalisation correspondant et un procédé de configuration automatique d'un routeur d'accès selon le mode général ou selon le mode avec traitement spécifique ou selon le mode avec DHCP-RAIO ou selon le mode avec serveur de profils dans lequel :
- les valeurs des paramètres de traitement de flux obtenues à l'étape b) sont transmises au serveur DHCP dont la proposition de bail est acceptée par le terminal client ; et
- ces valeurs des paramètres de traitement de flux sont insérées dans la réponse DHCPACK du serveur DHCP à la requête DHCPREQUEST du terminal client ; et
- la réponse DHCPACK, complétée avec les valeurs des paramètres de traitement de flux, est transmise au routeur d'accès ; et
- à la réception par le routeur d'accès du message DHCPACK complété, les valeurs des paramètres de traitement de flux sont extraites du message et le message duquel ont été extraites les informations de traitement de flux est transmis au terminal client ; et
- la configuration, à l'étape c), du routeur d'accès est effectuée avec les valeurs des paramètres de traitement de flux extraites du message DHCPACK complété reçu par le routeur d'accès.

En ce qui concerne le dispositif de mise en oeuvre du procédé selon l'invention, il est possible d'effectuer différents choix en ce qui concerne l'implantation des modules fonctionnels M1, M2 et M3. Cette souplesse d'adaptation est un des avantages de l'invention et concerne les trois versions du dispositif c'est-à-dire aussi bien le dispositif général que le dispositif avec traitement spécifique que le dispositif avec DHCP-RAIO.

Un premier choix d'implantation des modules, valable pour l'une quelconque des versions de dispositif évoquées ci-dessus, est représenté sur la Figure 1 : les modules M1, M2 et M3 sont implantés sur le routeur d'accès 2. Le fonctionnement du dispositif est aussi indiqué : le terminal client 1 envoi un message DHCPREQUEST 4 au module d'insertion M1 5 qui insère dans le message une information d'identification, ou identifiant ID, de la ligne du terminal et transmet le message complété 6 au serveur DHCP 3 qui répond au terminal par un message DHCPACK 7 ; le module M1 transmet l'identifiant ID 8 au module d'interrogation M2 9 qui envoie une requête d'interrogation 10 au serveur de profils SP 11, celui-ci répond en transmettant les valeurs des paramètres de traitement de flux 12, correspondant à l'identifiant ID, au module M2 ; le module M2 transmet ces valeurs 13 au module de configuration M3 14 qui effectue alors la configuration 15 du routeur pour traiter les flux du terminal.

Un deuxième choix d'implantation des modules, valable pour l'une quelconque des versions de dispositif, est représenté sur la Figure 2 : les différences par rapport à la Figure 1 apparaissent sur le routeur d'accès 21, où sont implantés les modules M1 et M3, et sur le serveur DHCP 31, où est implanté le module M2.

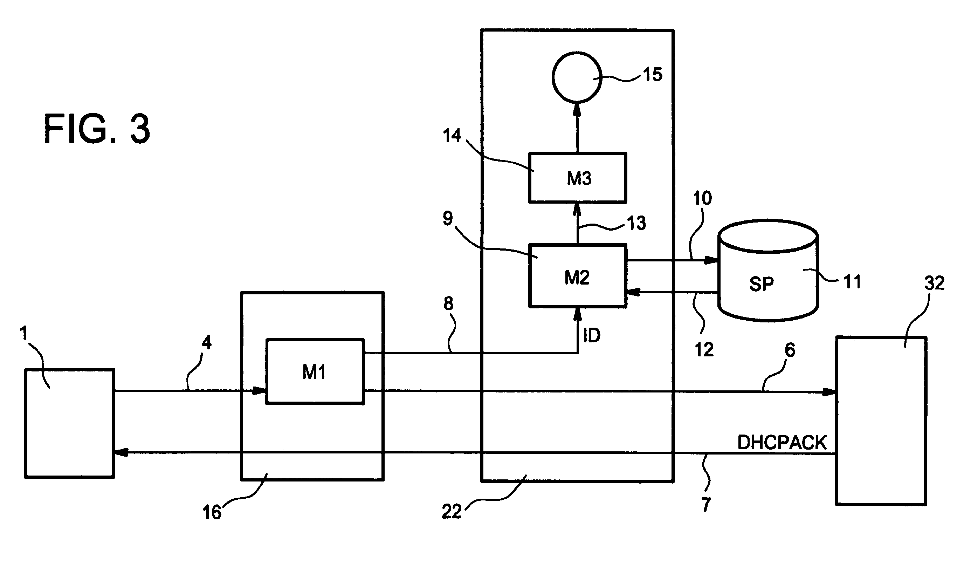

Un troisième choix d'implantation des modules, valable pour l'une quelconque des versions de dispositif, est représenté sur la Figure 3 : les modules M2 et M3 sont implantés sur le routeur d'accès 22 ; un agent relais DHCP 16 par lequel transite le trafic entre le terminal client 1 et le routeur d'accès 22, notamment vers le serveur DHCP 32.

Un quatrième choix d'implantation des modules, valable pour l'une quelconque des versions de dispositif, est représenté sur la Figure 3 : le module M1 est implanté sur un agent relais DHCP par lequel transite le trafic entre le terminal client 1 et le routeur d'accès 23, notamment vers le serveur DHCP 31 ; le module M2 est implanté sur le serveur 31 ; le module M3 est implanté sur le routeur d'accès 23.

D'autres variantes sont possibles, en particulier en ce qui concerne le serveur de profils SP qui est externe sur les figures 1 à 4 mais qui peut, par exemple, être implanté sur le routeur d'accès ou sur le serveur DHCP.

### RÉFÉRENCES

Les rapports RFC cités en référence sont disponibles sur le site Internet de l'organisation IETF (« the Internet Engineering Task Force ») à l'adresse suivante : http://www.ietf.org (à la page RFC).
[1] : RFC1180
[2] : RFC791
[3] : RFC2131
[4] : RFC1661
[5] : RFC2865
[6] : RFC2866
[7] : RFC793
[8] : RFC768
[9] : RFC2748
[10]: voir le site Internet : www.snmp.com
[11]: RFC854
[12] : RFC3046

## Revendications

1. Procédé de configuration automatique d'un routeur d'accès (2), compatible avec le protocole DHCP, pour effectuer un traitement automatique spécifique des flux IP d'un terminal client (1) dans un réseau informatique, en fonction d'un ensemble donné de valeurs de paramètres de traitement de flux correspondant à la ligne cliente du terminal client, le routeur d'accès assurant le routage du trafic DHCP entre le terminal client et tout serveur DHCP (3) du réseau apte à proposer un bail à ce terminal client,
**caractérisé en ce qu'**il comporte les étapes suivantes consistant à :
a) insérer au contenu d'une requête DHCP (4) émise sur le réseau par le terminal client, une information (8) permettant d'identifier la ligne cliente du terminal client, et transmettre la requête, ainsi complétée avec l'information d'identification, à un serveur DHCP (3) via le routeur d'accès (2) ; et
b) interroger un serveur de profils (11), avec comme clé d'interrogation l'information d'identification de la ligne cliente, pour obtenir les valeurs des paramètres de traitement de flux qui lui sont associées,
ledit serveur de profils comprenant une base de données dans laquelle sont stockées, pour chaque terminal client du réseau dont les flux doivent être traités, les valeurs des paramètres de traitement de flux correspondant à la ligne cliente du terminal client associées à l'information d'identification due la ligne cliente de ce terminal; et
c) configurer le routeur d'accès avec les valeurs de paramètres de traitement de flux obtenues à l'étape b).

2. Procédé selon la revendication 1 dans lequel les valeurs des paramètres de traitement des flux permettent de configurer le routeur d'accès (2) pour qu'il soit apte à effectuer sur des flux routés des opérations consistant à :
- filtrer certaines adresses IP du réseau, pour des flux dans le sens client vers réseau ou réseau vers client ; ou
- filtrer certains ports, pour des flux dans le sens client vers réseau ou réseau vers client ; ou
- filtrer certains protocoles IP, pour des flux dans le sens client vers réseau ou réseau vers client ; ou
- limiter le débit de flux IP à destination ou provenant de certaines adresses ou certains ports IP ; ou
- assurer une qualité de service spécifique pour certains flux IP, pour des flux dans le sens client vers réseau ou réseau vers client.

3. Procédé selon la revendication 1 ou 2 dans lequel l'information (8) permettant d'identifier la ligne cliente est une information de type DHCP-RAIO.

4. Procédé selon l'une quelconque des revendications 1 à 3, **caractérisé en ce que** la requête DHCP (4) appartient au groupe comprenant:
- une requête DHCPREQUEST;
- une requête DHCPDISCOVER.

5. Procédé selon l'une quelconque des revendications 1 à 4 dans lequel :
- les valeurs des paramètres de traitement de flux obtenues à l'étape b) sont transmises au serveur DHCP (3) dont une proposition de bail est acceptée par le terminal client; et
- ces valeurs des paramètres de traitement de flux sont insérées dans la réponse DHCPACK (7) du serveur DHCP (3) à la requête DHCP (4) du terminal client ; et
- la réponse DHCPACK, complétée avec les valeurs dés paramètres de traitement de fux, est transmise au routeur d'accès ; et
- à la réception par le routeur d'accès du message DHCPACK complété, les valeurs des paramètres de traitement de flux sont extraites du message et le message duquel ont été extraites les informations de traitement de flux est transmis au terminal client ; et
- la configuration, à l'étape c), du routeur d'accès est effectuée avec les valeurs des paramètres de traitement de flux extraites du message DHCPACK complété reçu par le routeur d'accès.

6. Dispositif de configuration automatique d'un routeur d'accès (2), compatible avec le protocole DHCP, pour effectuer un traitement automatique spécifique des flux IP d'un terminal client (1) dans un réseau informatique, en fonction d'un ensemble donné de valeurs de paramètres de traitement de flux correspondant à la ligne cliente du terminal client, le routeur d'accès assurant le routage du trafic DHCP entre le terminal client et tout serveur DHCP (3) du réseau apte à proposer un bail à ce terminal client, **caractérisé en ce qu'**il comporte :
- un serveur de profils (SP) connecté au réseau, comprenant une base de données dans laquelle sont stockées, pour chaque terminal client du réseau dont les flux doivent être traités, les valeurs des paramètres de traitement de flux correspondant à la ligne cliente du terminal client associées à l'information d'identification de la ligne cliente de ce terminal ; le serveur de profils (11) étant apte à :
- recevoir d'une entité du réseau une requête d'interrogation, avec comme clé d'interrogation une information (8) d'identification d'une ligne cliente ; et
- transmettre à l'entité, en réponse à la requête d'interrogation, les valeurs de paramètres de traitement de flux associées à la clé d'interrogation de la requête ;
- un module d'insertion, M1, apte à :
- recevoir une requête DHCP (4) du terminal client du réseau ; et
- insérer dans la requête reçue, une information (8) d'identification de la ligne cliente du terminal client ; et
- transmettre la requête complétée avec l'information d'identification de la ligne cliente au serveur DHCP ; et
- transmettre l'information d'identification de la ligne cliente à un deuxième module, M2 ;
- un deuxième module d'interrogation, M2, apte à :
- recevoir une information d'identification d'une ligne cliente ; et
- transmettre une requête d'interrogation au serveur de profils (SP), avec l'information d'identification d'une ligne cliente reçue comme clé d'interrogation ; et
- recevoir une réponse du serveur de profils (SP) concernant la requête d'interrogation transmise ; et
- transmettre les valeurs des paramètres de traitement de flux associées à l'information d'identification d'une ligne cliente, reçues dans la réponse du serveur de profils, à un troisième module, M3 ;
- un troisième module de configuration, M3, apte à
- recevoir les valeurs des paramètres de traitement de flux associées à une information d'identification d'une ligne cliente pour la configuration du routeur d'accès ; et
- configurer le routeur d'accès, en fonction des valeurs des paramètres de traitement de flux reçues.

7. Dispositif selon la revendication 6 dans lequel les valeurs des paramètres de traitement des flux permettent de configurer le routeur d'accès (2) pour qu'il soit apte à effectuer sur des flux routés des opérations consistant à :
- filtrer certaines adresses IP du réseau, pour des flux dans le sens client vers réseau ou réseau vers client ; ou
- filtrer certains ports, pour des flux dans le sens client vers réseau ou réseau vers client ; ou
- filtrer certains protocoles IP, pour des flux dans le sens client vers réseau ou réseau vers client ; ou
- limiter le débit de flux IP à destination ou provenant de certaines adresses ou certains ports IP ; ou
- assurer une qualité de service spécifique pour certains flux IP, pour des flux dans le sens client vers réseau ou réseau vers client.

8. Dispositif selon la revendication 6 ou 7 dans lequel l'information (8) permettant d'identifier le terminal client est une information de type DHCP-RAIO.

9. Dispositif selon l'une quelconque des revendications 6 à 8 dans lequel les modules M1, M2 et M3 sont implantés sur le routeur d'accès (2).

10. Dispositif selon la revendication 9 dans lequel le serveur de profils (SP) est implanté sur le routeur d'accès.

11. Dispositif selon la revendication 9 dans lequel le serveur de profils (11) est implanté sur le serveur DHCP.

12. Dispositif selon l'une quelconque des revendications 6 à 8 dans lequel les modules M1 et M3 sont implantés sur le routeur d'accès (2) et le module M2 est implanté sur le serveur DHCP (3), du réseau dont l'offre de bail est acceptée dans la requête de configuration DHCPREQUEST émise par le terminal client.

13. Dispositif selon l'une quelconque des revendications 6 à 8 dans lequel le module M1 est implanté sur un agent relais DHCP par lequel transite le trafic entre le terminal client (1) et le routeur d'accès (2), et les modules M2 et M3 sont implantés sur le routeur d'accès (2).

14. Dispositif selon l'une quelconque des revendications 6 à 8 dans lequel le module M1 est implanté sur un agent relais DHCP par lequel transite le trafic entre le terminal client (1) et le routeur d'accès (2), le module M2 est implanté sur le serveur DHCP (3) et le modulé M3 est implanté sur le routeur d'accès (2).

15. Dispositif selon l'une quelconque des revendications 13 ou 14 dans lequel l'agent relais est un multiplexeur d'accès de ligne numérique DSLAM.

## Claims

1. Method for automatic configuration of an access router (2), compatible with the DHCP protocol, for carrying out a specific automatic processing of the IP streams of a client terminal (1) in a computer network, according to a given set of stream-processing parameter values corresponding to the client line of the client terminal, the access router routing the DHCP traffic between the client terminal and any DHCP server (3) of the network capable of offering a lease to this client terminal,
**characterized in that** it comprises the following steps consisting in:
a) inserting into the content of a DHCP request (4) transmitted over the network by the client terminal an item of information (8) making it possible to identify the client line of the client terminal, and transmitting the request, thus supplemented with the identification information, to a DHCP server (3) via the access router (2); and
b) interrogating a profiles server (11), using as the interrogation key the identification information of the client line in order to obtain the values of the stream-processing parameters that are associated therewith,
said profiles server comprising a database in which are stored, for each client terminal of the network the streams of which are to be processed, the values of the stream-processing parameters corresponding to the client line of the client terminal, said values being associated with the identification information of the client line of this terminal; and
c) configuring the access router with the stream-processing parameter values obtained in step b).

2. Method according to Claim 1, in which the stream-processing parameter values make it possible to configure the access router (2) so that it is capable of carrying out, on routed streams, operations consisting in:
- filtering certain IP addresses of the network, for streams in the direction from the client to the network or from the network to the client; or
- filtering certain ports, for streams in the direction from the client to the network or from the network to the client; or
- filtering certain IP protocols, for streams in the direction from the client to the network or from the network to the client; or
- limiting the data rate of IP streams to or from certain addresses or certain IP ports; or
- ensuring a specific quality of service for certain IP streams, for streams in the direction from the client to the network or from the network to the client.

3. Method according to Claim 1 or 2, in which the information (8) making it possible to identify the client line is an item of information of the DHCP-RAIO type.

4. Method according to any one of Claims 1 to 3, **characterized in that** the DHCP request (4) belongs to the group comprising:
- a DHCPREQUEST request;
- a DHCPDISCOVER request.

5. Method according to any one of Claims 1 to 4, in which:
- the stream-processing parameter values obtained in step b) are transmitted to the DHCP server (3) from which an offer of lease is accepted by the client terminal; and
- these stream-processing parameter values are inserted into the DHCPACK reply (7) from the DHCP server (3) to the DHCP request (4) of the client terminal; and
- the DHCPACK response, supplemented by the stream-processing parameter values, is transmitted to the access router; and
- on receipt by the access router of the supplemented DHCPACK message, the stream-processing parameter values are extracted from the message and the message from which the stream-processing information has been extracted is transmitted to the client terminal; and
- the configuration, in step c), of the access router is carried out with the stream-processing parameter values extracted from the supplemented DHCPACK message received by the access router.

6. Device for the automatic configuration of an access router (2), compatible with the DHCP protocol, in order to carry out a specific automatic processing of the IP streams of a client terminal (1) in a computer network, according to a given set of stream-processing parameter values corresponding to the client line of the client terminal, the access router routing the DHCP traffic between the client terminal and any DHCP server (3) of the network capable of offering a lease to this client terminal, **characterized in that** it comprises:
- a profiles server (SP) connected to the network, comprising a database in which are stored, for each client terminal of the network of which the streams are to be processed, the stream-processing parameter values corresponding to the client line of the client terminal, said values being associated with the identification information of the client line of this terminal; the profiles server (11) being capable of:
- receiving from a network entity an interrogation request, using as the interrogation key an item of information (8) for identifying a client line; and
- transmitting to the entity, in reply to the interrogation request, the stream-processing parameter values associated with the interrogation key of the request;
- an insertion module, M1, capable of:
- receiving a DHCP request (4) from the client terminal of the network; and
- inserting into the received request an item of information (8) for identifying the client line of the client terminal; and
- transmitting the request supplemented by the information for identifying the client line to the DHCP server; and
- transmitting the information for identifying the client line to a second module, M2;
- a second interrogation module, M2, capable of:
- receiving an item of information for identifying a client line; and
- transmitting an interrogation request to the profiles server (SP), with the information for identifying a client line received as the interrogation key; and
- receiving a response from the profiles server (SP) concerning the transmitted interrogation request; and
- transmitting the stream-processing parameter values associated with the information for identifying a client line, received in the response from the profiles server, to a third module, M3;
- a third configuration module, M3, capable of:
- receiving the stream-processing parameter values associated with an item of information for identifying a client line for the configuration of the access router; and
- configuring the access router, according to the received stream-processing parameter values.

7. Device according to Claim 6, in which the stream-processing parameter values make it possible to configure the access router (2) so that it is capable of carrying out, on routed streams, operations consisting in:
- filtering certain IP addresses of the network, for streams in the direction from the client to the network or from the network to the client; or
- filtering certain ports, for streams in the direction from the client to the network or from the network to the client; or
- filtering certain IP protocols, for streams in the direction from the client to the network or from the network to the client; or
- limiting the data rate of IP streams to or from certain addresses or certain IP ports; or
- ensuring a specific quality of service for certain IP streams, for streams in the direction from the client to the network or from the network to the client.

8. Device according to Claim 6 or 7, in which the item of information (8) making it possible to identify the client terminal is an item of information of the DHCP-RAIO type.

9. Device according to any one of Claims 6 to 8, in which the modules M1, M2 and M3 are installed on the access router (2).

10. Device according to Claim 9, in which the profiles server (SP) is installed on the access router.

11. Device according to Claim 9, in which the profiles server (11) is installed on the DHCP server.

12. Device according to any one of Claims 6 to 8, in which the modules M1 and M3 are installed on the access router (2) and the module M2 is installed on the DHCP server (3) of the network of which the offer of lease is accepted in the configuration request DHCPREQUEST transmitted by the client terminal.

13. Device according to any one of Claims 6 to 8, in which the module M1 is installed on a DHCP relay agent through which the traffic passes between the client terminal (1) and the access router (2), and the modules M2 and M3 are installed on the access router (2).

14. Device according to any one of Claims 6 to 8, in which the module M1 is installed on a DHCP relay agent through which passes the traffic between the client terminal (1) and the access router (2), the module M2 is installed on the DHCP server (3) and the module M3 is installed on the access router (2).

15. Device according to either one of Claims 13 or 14 in which the relay agent is a Digital Subscriber Line Access Multiplexer DSLAM.

## Patentansprüche

1. Verfahren zur automatischen Konfiguration eines mit dem DHCP-Protokoll kompatiblen Zugangsrouters (2), um eine spezifische automatische Verarbeitung der IP-Flüsse eines Client-Endgeräts (1) in einem Informatiknetz in Abhängigkeit von einer gegebenen Gruppe von Werten von Flussverarbeitungsparametern durchzuführen, die der Client-Leitung des Client-Endgeräts entsprechen, wobei der Zugangsrouter das Routen des DHCP-Verkehrs zwischen dem Client-Endgerät und jedem DHCP-Server (3) des Netzes gewährleistet, der diesem Client-Endgerät einen Mietvertrag anbieten kann,
**dadurch gekennzeichnet, dass** es die folgenden Schritte aufweist, die darin bestehen:
a) in den Inhalt einer DHCP-Anforderung (4), die vom Client-Endgerät im Netz gesendet wird, eine Information (8) einzufügen, die es ermöglicht, die Client-Leitung des Client-Endgeräts zu identifizieren, und die so mit der Identifikationsinformation vervollständigte Anforderung über den Zugangsrouter (2) an einen DHCP-Server (3) zu übertragen; und
b) einen Profilserver (11) abzufragen, mit als Abfrageschlüssel der Identifikationsinformation der Client-Leitung, um die ihr zugeordneten Werte der Flussverarbeitungsparameter zu erhalten,
wobei der Profilserver eine Datenbank enthält, in der für jedes Client-Endgerät des Netzes, dessen Flüsse verarbeitet werden sollen, die Werte der Flussverarbeitungsparameter entsprechend der Client-Leitung des Client-Endgeräts gespeichert sind, die der Identifikationsinformation der Client-Leitung dieses Endgeräts zugeordnet sind; und
c) den Zugangsrouter mit den im Schritt b) erhaltenen Werten von Flussverarbeitungsparametern zu konfigurieren.

2. Verfahren nach Anspruch 1, bei dem die Werte der Flussverarbeitungsparameter es ermöglichen, den Zugangsrouter (2) so zu konfigurieren, dass er an gerouteten Flüssen Operationen durchführen kann, die darin bestehen:
- bestimmte IP-Adressen des Netzes für Flüsse in der Richtung Client-Netz oder Netz-Client zu filtern; oder
- bestimmte Ports für Flüsse in der Richtung Client-Netz oder Netz-Client zu filtern; oder
- bestimmte IP-Protokolle für Flüsse in der Richtung Client-Netz oder Netz-Client zu filtern; oder
- den IP-Flussdurchsatz für oder von bestimmten Adressen oder bestimmten IP-Ports zu begrenzen; oder
- eine spezifische Dienstqualität für bestimmte IP-Flüsse für Flüsse in der Richtung Client-Netz oder Netz-Client zu gewährleisten.

3. Verfahren nach Anspruch 1 oder 2, bei dem die Information (8), die es ermöglicht, die Client-Leitung zu identifizieren, eine Information vom Typ DHCP-RAIO ist.

4. Verfahren nach einem der Ansprüche 1 bis 3, **dadurch gekennzeichnet, dass** die DHCP-Anforderung (4) zu der Gruppe gehört, die enthält:
- eine Anforderung DHCPREQUEST;
- eine Anforderung DHCPDISCOVER.

5. Verfahren nach einem der Ansprüche 1 bis 4, bei dem:
- die Werte der im Schritt b) erhaltenen Flussverarbeitungsparameter an den DHCP-Server (3) übertragen werden, von dem ein Mietvertragsvorschlag vom Client-Endgerät akzeptiert wird; und
- diese Flussverarbeitungsparameter in die DHCPACK-Antwort (7) des DHCP-Servers (3) auf die DHCP-Anforderung (4) des Client-Endgeräts eingefügt werden; und
- die mit den Werten der Flussverarbeitungsparameter vervollständigte DHCPACK-Antwort an den Zugangsrouter übertragen wird; und
- bei Empfang der vervollständigten DHCPACK-Mitteilung durch den Zugangsrouter die Werte der Flussverarbeitungsparameter aus der Mitteilung entnommen werden und die Mitteilung, aus der die Flussverarbeitungsinformationen entnommen wurden, an das Client-Endgerät übertragen wird; und
- die Konfiguration des Zugangsrouters im Schritt c) mit den Werten der Flussverarbeitungsparameter durchgeführt wird, die aus der vom Zugangsrouter empfangenen, vervollständigten DHCPACK-Mitteilung entnommen werden.

6. Vorrichtung zur automatischen Konfiguration eines mit dem DHCP-Protokoll kompatiblen Zugangsrouters (2), um eine spezifische automatische Verarbeitung der IP-Flüsse eines Client-Endgeräts (1) in einem Informatiknetz in Abhängigkeit von einer gegebenen Gruppe von Werten von Flussverarbeitungsparametern durchzuführen, die der Client-Leitung des Client-Endgeräts entsprechen, wobei der Zugangsrouter das Routen des DHCP-Verkehrs zwischen dem Client-Endgerät und jedem DHCP-Server (3) des Netzes gewährleistet, der diesem Client-Endgerät einen Mietvertrag anbieten kann, **dadurch gekennzeichnet, dass** sie aufweist:
- einen mit dem Netz verbundenen Profilserver (SP), der eine Datenbank enthält, in der für jedes Client-Endgerät des Netzes, dessen Flüsse verarbeitet werden sollen, die Werte der Flussverarbeitungsparameter entsprechend der Client-Leitung des Client-Endgeräts gespeichert sind, die der Identifikationsinformation der Client-Leitung dieses Endgeräts zugeordnet sind, wobei der Profilserver (11) fähig ist:
- von einer Entität des Netzes eine Abfrageanforderung mit als Abfrageschlüssel einer Identifikationsinformation (8) einer Client-Leitung zu empfangen; und
- an die Entität als Antwort auf die Abfrageanforderung die Werte von Flussverarbeitungsparametern zu übertragen, die dem Abfrageschlüssel der Anforderung zugeordnet sind;
- ein Einfügungsmodul, M1, das fähig ist:
- eine DHCP-Anforderung (4) vom Client-Endgerät des Netzes zu empfangen; und
- in die empfangene Anforderung eine Identifikationsinformation (8) der Client-Leitung des Client-Endgeräts einzufügen; und
- die vervollständigte Anforderung mit der Identifikationsinformation der Client-Leitung an den DHCP-Server zu übertragen; und
- die Identifikationsinformation der Client-Leitung an ein zweites Modul, M2, zu übertragen;
- ein zweites Abfragemodul, M2, das fähig ist:
- eine Identifikationsinformation einer Client-Leitung zu empfangen; und
- eine Abfrageanforderung an den Profilserver (SP) mit der Identifikationsinformation einer empfangenen Client-Leitung als Abfrageschlüssel zu übertragen; und
- eine Antwort des Profilservers (SP) betreffend die übertragene Abfrageanforderung zu empfangen; und
- die Werte der der Identifikationsinformation einer Client-Leitung zugeordneten Flussverarbeitungsparameter, die in der Antwort des Profilserver empfangen werden, an ein drittes Modul, M3, zu übertragen;
- ein drittes Konfigurationsmodul, M3, das fähig ist:
- die einer Identifikationsinformation einer Client-Leitung zugeordneten Werte der Flussverarbeitungsparameter für die Konfiguration des Zugangsrouters zu empfangen; und
- den Zugangsrouter in Abhängigkeit von den empfangenen Werten der Flussverarbeitungsparameter zu konfigurieren.

7. Vorrichtung nach Anspruch 6, bei der die Werte der Flussverarbeitungsparameter es ermöglichen, den Zugangsrouter (2) so zu konfigurieren, dass er fähig ist, an gerouteten Flüssen Operationen durchzuführen, die darin bestehen:
- bestimmte IP-Adressen des Netzes für Flüsse in der Richtung Client-Netz oder Netz-Client zu filtern; oder
- bestimmte Ports für Flüsse in der Richtung Client-Netz oder Netz-Client zu filtern; oder
- bestimmte IP-Protokolle für Flüsse in der Richtung Client-Netz oder Netz-Client zu filtern; oder
- den IP-Flussdurchsatz für oder von bestimmten Adressen oder bestimmten IP-Ports zu begrenzen; oder
- eine spezifische Dienstqualität für bestimmte IP-Flüsse für Flüsse in der Richtung Client-Netz oder Netz-Client zu gewährleisten.

8. Vorrichtung nach Anspruch 6 oder 7, bei der die Information (8), die es ermöglicht, das Client-Endgerät zu identifizieren, eine Information vom Typ DHCP-RAIO ist.

9. Vorrichtung nach einem der Ansprüche 6 bis 8, bei der die Module M1, M2 und M3 in den Zugangsrouter (2) eingesetzt sind.

10. Vorrichtung nach Anspruch 9, bei der der Profilserver (SP) in den Zugangsrouter eingesetzt ist.

11. Vorrichtung nach Anspruch 9, bei der der Profilserver (11) in den DHCP-Server eingesetzt ist.

12. Vorrichtung nach einem der Ansprüche 6 bis 8, bei der die Module M1 und M3 in den Zugangsrouter (2) eingesetzt sind und das Modul M2 in den DHCP-Server (3) des Netzes eingesetzt ist, dessen Mietvertragsangebot in der vom Client-Endgerät gesendeten DHCPREQUEST-Konfigurationsanforderung akzeptiert wird.

13. Vorrichtung nach einem der Ansprüche 6 bis 8, bei der das Modul M1 in einen DHCP-Relais-Agenten eingesetzt ist, durch den der Verkehr zwischen dem Client-Endgerät (1) und dem Zugangsrouter (2) verläuft, und die Module M2 und M3 in den Zugangsrouter (2) eingesetzt sind.

14. Vorrichtung nach einem der Ansprüche 6 bis 8, bei der das Modul M1 in einen DHCP-Relais-Agenten eingesetzt ist, durch den der Verkehr zwischen dem Client-Endgerät (1) und dem Zugangsrouter (2) verläuft, das Modul M2 in den DHCP-Server (3) eingesetzt ist und das Modul M3 in den Zugangsrouter (2) eingesetzt ist.

15. Vorrichtung nach einem der Ansprüche 13 oder 14, bei der Relais-Agent ein Digitalleitungs-Zugangsmultiplexer DSLAM ist.
